# EUROPÄISCHE PATENTANMELDUNG

(11) **EP 4 545 298 A1**
(43) Veröffentlichungstag der Anmeldung: **30.04.2025**
(21) Anmeldenummer: 23206044.2
(22) Anmeldetag: 26.10.2023
(51) Int. Cl.: B32B 27/12, B32B 1/00, B32B 7/02, B32B 27/08, B32B 27/10, B32B 27/20, B32B 27/30, B32B 27/36

(54) **VERPACKUNG UND HERSTELLUNGSVERFAHREN DAFÜR**

(71) Anmelder: Tchibo GmbH, 22297 Hamburg (DE)
(72) Erfinder: DÖHMEN, Ben, 20144 Hamburg (DE); MAYR, Viktoria, 22926 Ahrensburg (DE)
(74) Vertreter: Frei Patent Attorneys

(57) **Zusammenfassung**

Die Verpackung (1) weist ein Fasergussteil (2) und eine Folie (3) auf, die dem Fasergussteil (2) angeformt ist. Dabei ist das Fasergussteil (2) kompostierbar, und auch die Folie (3) ist kompostierbar. Die ganze Verpackung (1) kann kompostierbar sein. Die Folie (3) kann zwei- oder dreilagig sein und sowohl eine Wasserdampfdiffusionsbarriere als auch eine Sauerstoffdiffusionsbarriere bilden. Die Verpackung (1) kann eine Umverpackung für mehrere Portionspackungen (4) sein, die jeweils ein Extraktionsgut (42) beinhalten, und die kompostierbar sind. Die Folie (3) kann eine Mehrlagenfolie sein, mit einer ersten Lage (31) aus PBS oder PHBH und einer zweiten Lage (32) aus einem Vinylalkohol-Copolymer. Zur Herstellung kann die Folie (3) thermogeformt werden.

## Beschreibung

Die Erfindung bezieht sich auf Verpackungen und auf Verfahren zu deren Herstellung. Sie bezieht sich auf Vorrichtungen und Verfahren gemäss den Gattungsbegriffen der Patentansprüche. Insbesondere betrifft die Erfindung Verpackungen (Umverpackungen) für Portionspackungen wie beispielsweise Kaffeekapseln.

Aus ökologischen Gründen kann es sinnvoll sein, wenn Verpackungen, die für den einmaligen Verbrauch vorgesehen sind, kompostierbar sind. Beispielsweise sind Verpackungen aus Faserguss bekannt, die im Kompost entsorgbar sind. Allerdings sind Verpackungen aus Faserguss in der Regel ungeeignet, um damit Produkte zu verpacken, die vor Feuchtigkeit und/oder vor Sauerstoff zu schützen sind.

Eine Möglichkeit, ein solches Produkt vor Feuchtigkeit und/oder vor Sauerstoff zu schützen, wäre, eine Polyethylenfolie auf ein Fasergussteil aufzulaminieren. Abhängig von der Form des Fassergussteils kann das Auflaminieren allerdings schwierig sein, insbesondere wenn das Fasergussteil steile Vertiefungen aufweist. Ausserdem ist Polyethylen nicht kompostierbar, so dass eine solche Verpackung nicht kompostierbar ist und zum Entsorgen als Ganzes entweder thermisch zu verwerten ist oder in Bestandteile zerlegt werden muss (Fasergussteil und Folie), die dann getrennt entsorgt werden. Bei unsachgemässiger Entsorgung kann das Polyethylen als Mikroplastik in die Umwelt gelangen.

Bei Portionspackungen für Extraktionsgut wie für gemahlenen Kaffee (Kaffeekapseln), geht der Trend zu kompostierbaren Portionspackungen, so dass die Kaffeekapseln nach Gebrauch als Ganzes im Kompost entsorgt werden können. Allerdings ist es nicht ohne weiteres möglich, die Portionspackungen so zu konzipieren, dass sie das darin enthaltene Extraktionsgut (z.B. Kaffeepulver) ausreichend gut vor Feuchtigkeit bzw. Wasserdampf und Sauerstoff schützen. Darum kann es sinnvoll sein, eine Umverpackung für Portionspackungen vorzusehen, durch die ein Schutz der Portionspackungen vor Feuchtigkeit und Sauerstoff gewährleistet werden kann, so das letztlich für das Extraktionsgut ein ausreichender Schutz erreicht wird. Und eine solche Umverpackung sollte dann mit Vorteil auch kompostierbar sein.

Es ist eine Aufgabe der Erfindung, eine Verpackung zu schaffen, die besonders ökologisch ist.

Eine weitere Aufgabe der Erfindung ist, eine Verpackung zu schaffen, die als Ganzes kompostierbar ist.

Eine weitere Aufgabe der Erfindung ist, eine Verpackung zu schaffen, die eine lange Haltbarkeit eines darin verpackten Produktes ermöglichen kann, insbesondere wenn das Produkt, zur Wahrung einer hohen Produktqualität, besonders gut vor Feuchtigkeit und/oder Sauerstoff zu schützen ist.

Eine weitere Aufgabe der Erfindung ist, eine Verpackung zu schaffen, die eine gute Herstellbarkeit aufweist.

Eine weitere Aufgabe der Erfindung ist, eine Verpackung zu schaffen, die relativ leicht ist bzw. aus wenig Material, insbesonder aus wenig Polymermaterial besteht.

Eine weitere Aufgabe der Erfindung ist, eine Verpackung zu schaffen, die sich gut zum Verpacken trockener Produkte eignet.

Eine weitere Aufgabe der Erfindung ist, eine Verpackung zu schaffen, die sich gut zum Verpacken feuchter Produkte eignet.

Eine weitere Aufgabe der Erfindung ist, eine Verpackung zu schaffen, die, wenn sie in die Umwelt gelangt, kein Mikroplastik erzeugt.

Eine weitere Aufgabe der Erfindung ist, eine Verpackung zu schaffen, die keine Biotoxizität aufweist, wenn sie in die Umwelt gelangt.

Eine weitere Aufgabe der Erfindung ist, ein neues Herstellungsverfahren zum Herstellen einer Verpackung zu schaffen.

Eine weitere Aufgabe der Erfindung ist, ein Verfahren zum Herstellen einer Verpackung zu schaffen, mit dem eine Vielzahl von Verpackungsformen herstellbar ist.

Mindestens eine dieser Aufgaben wird zumindest teilweise durch Vorrichtungen oder Verfahren gemäss den Patentansprüchen gelöst.

Die **Verpackung** weist ein **Fasergussteil** und eine **Folie** auf, wobei die Folie dem Fasergussteil angeformt ist. Dabei ist das Fasergussteil kompostierbar, und auch die Folie ist kompostierbar. Dadurch wird ein Materialverbund geschaffen, der einerseits ein darin verpacktes Produkt schützen kann, beispielsweise mechanisch schützen kann. Und andererseits sind die zwei Komponenten Fasergussteil und Folie kompostierbar, was aus ökoligischer Sicht vorteilhaft ist. Insbesondere kann die Verpackung kompostierbar sein. Zum Beispiel kann die Verpackung im wesentlichen aus dem Fasergussteil und der Folie bestehen.

Durch das Angeformtsein kann der Materialverbund von einem Verbraucher als ein einziges Teil wahrgenommen werden.

Die Folie kann an dem Fasergussteil anhaften. Sie kann zum Beispiel im wesentlichen vollflächig oder, alternativ, stellenweise an dem Fasergussteil anhaften.

Das Fasergussteil kann in einem der bekannten Fasergussverfahren hergestellt werden, beispielsweise aus Altpapierfasem und/oder anderen Cellulosefasern; natürlich gegebenenfalls mit üblichen Additiven.

Das Fasergussteil kann, wie üblich, ein Formteil sein, beispielsweise kann es für jede von mehreren in der Verpackung zu verpackenden Produkten (zum Beispiel) Portionspackungen je eine Vertiefung aufweisen.

Mittels des weiter unten beschriebenen Verfahrens kann die Verpackung auf effiziente Weise hergestellt werden.

In der vorliegenden Offenbarung kann «kompostierbar» insbesondere auch «heimkompostierbar» bedeuten.

In der vorliegenden Offenbarung können die Ausdrücke **«kompostierbar»** und **«heimkompostierbar»** insbesondere bedeuten: «kompostierbar» bzw. «heimkompostierbar» gemäss der europäischen Norm EN 13432 (insbesondere: EN 13432:2004) für Verpackungen und/oder gemäss der europäischen Norm EN 14995 (insbesondere: EN 14995:2006) für Kunststoffe.

Die Folie kann eine Polymerfolie sein und insbesondere aus thermoplastischem Material bestehen. Wenn die Folie thermoplastisch ist, kann sie gut an das Fasergussteil angepasst werden, insbesondere durch Anwendung von Wärme.

In Ausführungsformen weist die Folie eine Lage auf, die zu mindestens 90 Gewichtsprozent, insbesondere im wesentlichen, aus einem **Poly(3-hydroxybutyrat-co-3-hydroxyhexanoat)** besteht, auch bekannt als PHBH. Insbesondere kann die Lage zu mindestens 90 Gewichtsprozent, insbesondere im wesentlichen, aus einem mit einem **Füllmaterial** gefüllten PHBH bestehen. Durch das Füllmaterial ist es vereinfacht oder erst möglich, das PHBH zu einer Folie zu formen und, insbesondere, diese Folie durch Thermoformen an ein Faserteil anzuformen. Thermoformen für Folien wird gelegentlich auch als «Tiefziehen» bezeichnet.

Als **Füllmaterial** kommen beispielsweise anorganische Materialien, insbesondere in Pulverform, infrage, beispielsweise Talkum.

In Ausführungsformen besteht die Folie im wesentlichen aus dieser Lage.

PHBH ist gut geeignet, eine Wasserdampfdiffusionsbarriere zu bilden. Und je nach Formulierung kann PHBH auch ein Sauerstoffdiffusionsbarriere bilden.

Um hohen Barriereanforderungen gerecht zu werden, die beispielsweise Kaffeeprodukte haben, kann die Folie insbesondere ein **Mehrlagenfolie** sein. Beispielsweise kann eine Lage eine besonders starke Wasserdampfdiffusionsbarriere bilden und eine andere Lage eine besonders starke Sauerstoffdiffusionsbarriere.

In Ausführungsformen weist die Folie eine **erste Lage** aus einem **ersten Polymermaterial** und eine **zweite Lage** aus einem **zweiten Polymermaterial** auf. Die erste Lage kann zwischen dem Fasergussteil und der zweiten Lage angeordnet sein. Insbesondere kann die erste Lage an das Fasergussteil angrenzend sein. Dabei kann dazwischen gegebenenfalls noch ein Haftvermittler vorgesehen sein, um die Haftung der ersten Lage (bzw. des ersten Polymermaterials) am Fasergussteil zu verbessern. Ausserdem kann die erste Lage an die zweite Lage angrenzend sein. Wie weiter unten noch erläutert wird, kann ein solcher zweilagiger Aufbau schon ausreichend sein, also die Ansprüche des Produktes befriedigen, insbesondere wenn die zu verpackenden Produkte trocken sind; oder es kann, insbesondere wenn die zu verpackenden Produkte feucht sind, noch eine dritte Lage (aus einem drittem Polymer) vorgesehen sein, die an die zweite Lage angrenzend ist.

In Ausführungsformen ist das erste Polymermaterial ein **wasserunlösliches** Polymermaterial. Solche Materialien können gut geeignet sein, eine Wasserdampfdiffusionsbarriere zu bilden, zum Beispiel PHBH (gegebenenfalls gefüllt) und Polybutylensuccinat (PBS). Dadurch kann die Folie relativ dünn bzw. leicht sein.

In Ausführungsformen bildet die erste Lage eine **Wasserdampfdiffusionsbarriere.** Ihre Wasserdampf-Transmissionsrate (Englisch: water vapor transmission rate, **WVTR**) bei 23°C und einer relativen Luftfeuchtigkeit von 85% kann beispielsweise maximal 25 g/m² pro Tag, insbesondere maximal 10 g/m² pro Tag betragen oder sogar nur maximal 5 g/m² pro Tag. So kann ein guter Schutz der zu verpackenden Produkte vor Feuchtigkeit erreicht werden.

In Ausführungsformen bildet die Folie eine **Wasserdampfdiffusionsbarriere.** Ihre Wasserdampf-Transmissionsrate bei 23°C und einer relativen Luftfeuchtigkeit von 85% kann beispielsweise maximal 10 g/m² pro Tag, insbesondere maximal 5 g/m² pro Tag oder sogar nur maximal 2 g/m² pro Tag betragen. So kann ein guter Schutz der zu verpackenden Produkte vor Feuchtigkeit erreicht werden.

Die Wasserdampf-Transmissionsraten (**WVTR**) in der vorliegenden Offenbarung können insbesondere gemäss ISO 15106-2 (insbesondere: ISO 15106-2:2015) bestimmt werden.

In Ausführungsformen besteht das erste Polymermaterial zu mindestens 90 Gewichtsprozent, insbesondere im wesentlichen, aus einem Polybutylensuccinat (PBS). Dieses Material lässt sich gut anformen, beispielsweise durch Thermoformen, und ist gut geeignet, eine starke Wasserdampfdiffusionsbarriere zu bilden.

In Ausführungsformen besteht das erste Polymermaterial zu mindestens 90 Gewichtsprozent, insbesondere im wesentlichen, aus einem PHBH; insbesondere aus einem mit einem **Füllmaterial** gefüllten PHBH. Dieses Material, insbesondere mit dem Füllmaterial, lässt sich gut anformen, beispielsweise durch Thermoformen, und ist gut geeignet, eine starke Wasserdampfdiffusionsbarriere zu bilden. Ausserdem kann es eine Sauerstoffdiffusionsbarriere bilden.

In Ausführungsformen bildet die zweite Lage eine **Sauerstoffdiffusionsbarriere.** Ihre Sauerstoff-Transmissionsrate bei 23°C und einer relativen Luftfeuchtigkeit von 50% kann beispielsweise maximal 3 cm³/m² pro Tag, insbesondere maximal 1 cm³/m² pro Tag betragen, oder sogar nur 0.2 cm³/m² pro Tag. So kann ein guter Schutz der zu verpackenden Produkte vor Sauerstoff erreicht werden.

In Ausführungsformen bildet die Folie eine **Sauerstoffdiffusionsbarriere.** Ihre Sauerstoff-Transmissionsrate (Englisch: oxygen transmission rate, OTR) bei 23°C und einer relativen Luftfeuchtigkeit von 50% kann beispielsweise maximal 1 cm³/m² pro Tag, insbesondere maximal 0.2 cm³/m² pro Tag betragen. So kann ein guter Schutz der zu verpackenden Produkte vor Sauerstoff erreicht werden.

Die Sauerstoff-Transmissionsraten (**OTR**) in der vorliegenden Offenbarung können insbesondere gemäss ISO 15105-2 (April 2022) bestimmt werden.

In Ausführungsformen besteht das zweite Polymermaterial zu mindestens 90 Gewichtsprozent, insbesondere im wesentlichen, aus einem **Vinylalkohol-Copolymer.** Diese Materialien können starke Sauerstoffdiffusionsbarrieren bilden. Dadurch kann die Folie relativ dünn bzw. leicht sein.

In Ausführungsformen besteht das zweite Polymermaterial zu mindestens 90 Gewichtsprozent, insbesondere im wesentlichen, aus einem der folgenden:
- Poly(Vinylalkohol)-Copolymer (**PVOH**);
- Butendiol-Vinylalkohol-Copolymer (**BVOH**);
- Ethylen-Vinylalkohol-Copolymer (**EVOH**);
oder aus einer Mischung von mindestens zwei der folgenden:
- Poly(Vinylalkohol)-Copolymer;
- Butendiol-Vinylalkohol-Copolymer;
- Ethylen-Vinylalkohol-Copolymer.

Diese Materialien weisen guten Sauerstoffdiffusionsbarriere-Eigenschaften auf und sind zu Folien verarbeitbar, die gut anformbar sind, zum Beispiel durch Thermoformen.

PVOH weist ausserdem eine sehr gute Bioabbaubarkeit auf. PVOH ist sehr gut kompostierbar.

BVOH kann besonders gut wasserlöslich sein, insbesondere bei hohen Hydrolysegraden.

EVOH kann, insbesondere bei hohen Ethylen-Gehalten, eine besonders starke Sauerstoffdiffusionsbarriere bilden, insbesondere bei eher hoher Feuchtigkeit.

In Ausführungsformen ist durch die Verpackung ein **Innenraum** zur Aufnahme eines zu verpackenden Produkts umschliessbar, insbesondere luftdicht verschliessbar.

In Ausführungsformen ist die zweite Lage an den Innenraum angrenzend. Besonders für trockene Produkte kann ein entsprechender Verpackungsaufbau mit der Schichtfolge:
(i) Fasergussteil
(ii) erste Lage, Wasserdampfdiffusionsbarriere-bildend wie genannt, insbesondere aus PHBH oder PBS, wie genannt;
(iii) zweite Lage, Sauerstoffdiffusionsbarriere-bildend wie genannt, insbesondere aus einem Vinylalkohol-Copolymer, wie genannt;
von Vorteil sein, weil er sehr einfach ist (zweilagige Folie), und die erste Lage verhindert, dass Feuchtigkeit, die vom Fasergussteil aufgenommen wird, bis an die zweite Lage gelangt, so dass die von der zweiten Lage gebildete Sauerstoffdiffusionsbarriere nicht durch Feuchtigkeit verringert oder zerstört wird.

Wenn feuchte Produkte zu verpacken sind, kann der genannte Schichtaufbau verwendet werden, ergänzt um eine dritte Lage, durch welche die zweite Lage vor der Feuchtigkeit des Produkts geschützt wird, so dass deren Sauerstoffdiffusionsbarrieren-Funktionalität nicht verringert oder zerstört wird.

In Ausführungsformen weist darum die Folie eine **dritte Lage** aus einem **dritten Polymermaterial** auf, wobei die zweite Lage zwischen der ersten Lage und der dritten Lage angeordnet ist, und wobei durch die Verpackung ein **Innenraum** zur Aufnahme eines zu verpackenden Produkts umschliessbar ist, wobei die dritte Lage an den Innenraum angrenzend ist.

Insbesondere kann die zweite Lage an die erste Lange und an die dritte Lage angrenzend sein.

Für die Materialwahl für die dritte Lage kann dasselbe gelten wie im Falle der ersten Lage.

In Ausführungsformen ist die Verpackung eine Umverpackung für mehrere Portionspackungen (oder auch «Kapseln») für ein Extraktionsgut, beispielsweise für Kaffee (insbesondere gemahlenen Kaffee) oder Tee. Solche Portionspackungen sind hinlänglich bekannt, beispielsweise als «Kaffeekapseln».

Unter den Systemen zum Zubereiten von Getränken sind die sogenannten Kaffeekapselsysteme (es gibt sie auch in Varianten zur Zubereitung von Tee) bekannt, bei denen im allgemeinen heisses Wasser meist unter Druck in eine solche Kapsel eingeführt wird, um durch Extraktion ein Kaffee- oder Teegetränk zuzubereiten. Für das Einfiilmen des heissen Wassers wird die Kapsel oft auf der einen Seite (Injektionsseite) angestochen. Für das Ausleiten des gebrühten Getränks, im allgemeinen auf der anderen Seite der Kapsel (der Extraktionsseite) sind verschiedene Möglichkeiten bekannt.

Am weitesten verbreitet sind Kapseln aus Materialien, die weder biologisch abbaubar sind noch aus erneuerbaren Rohstoffen bestehen. Die Kapseln bestehen zu einem hohen Anteil beispielsweise aus Aluminium oder aus Polypropylen (PP). Solche Kapseln können vorteilhafte Eigenschaften sowohl für die Lagerung (z.B. Dichtigkeit, insbesondere Luft-/Sauerstoff-Undurchlässigkeit) als auch für die Anwendung (z.B. Wärmeformbeständigkeit, Anstechverhalten etc.) haben.

Entsprechend bilden kompostierbare Kapseln einen bedeutenden ökologischen Fortschritt. Ein verbesserter Schutz des Extraktionsgutes kann erzielt werden, wenn dieses nicht nur durch die Portionsverpackung vor Sauerstoff und/oder Feuchtigkeit geschützt wird, sondern zusätzlich auch noch durch eine Verpackung bzw. Umverpackung der hier beschrioebenen Art, welche dann in der Regel mehrere kompostierbare Kapseln (Portionspackungen) enthält.

Das **Verfahren** zur Herstellung einer Verpackung kann insbesondere ein Verfahren zur Herstellung einer Verpackung der hierin beschriebenen Art sein.

Das Verfahren beinhaltet
- Bereitstellen eines kompostierbaren Fasergussteils;
- Bereitstellen einer kompostierbaren Folie;
- Anformen der Folie an das Fasergussteil.

In Ausführungsformen beinhaltet das Anformen ein **Thermoformen** der Folie. Dabei wird die Folie also erwärmt. Durch das Erwärmen ist die Folie leicht dehnbar und kann sich der Form des Fasergussteils anpassen. Ausser erhöhter Temperatur können beim Anformen auch noch Druckluft und/oder Unterdruck angewendet werden und/oder Formwerkzeuge.

In Ausführungsformen wird durch das Anformen eine formschlüssige Verbindung zwischen dem Fasergussteil und der Folie erzeugt. Dies kann insbesondere der Fall sein, wenn das Fasergussteil eine geeignet grosse Oberflächenrauhigkeit aufweist.

In Ausführungsformen wird vor dem Anformen ein Haftvermittler zwischen dem Fasergussteil und der Folie eingebracht, um eine ausreichende Haftung zwischen Fasergussteil und Folie zu erreichen.

Grundsätzlich sind auch andere Verfahren möglich, beispielsweise kann die Folie auch auflaminiert werden.

Im folgenden wird der Erfindungsgegenstand anhand von Ausführungsbeispielen und den beiliegenden Zeichnungen näher erläutert. Es zeigen stark schematisiert:
- Fig. 1: eine als Umverpackung ausgebildete Verpackung, enthaltend Portionspackungen, geschnitten;
- Fig. 2: einen Schnitt durch eine Wand der Verpackung aus Fig. 1.

Für das Verständnis der Erfindung nicht wesentliche Teile sind zum Teil nicht dargestellt. Die beschriebenen Ausführungsbeispiele stehen beispielhaft für den Erfindungsgegenstand oder dienen seiner Erläuterung und haben keine beschränkende Wirkung.

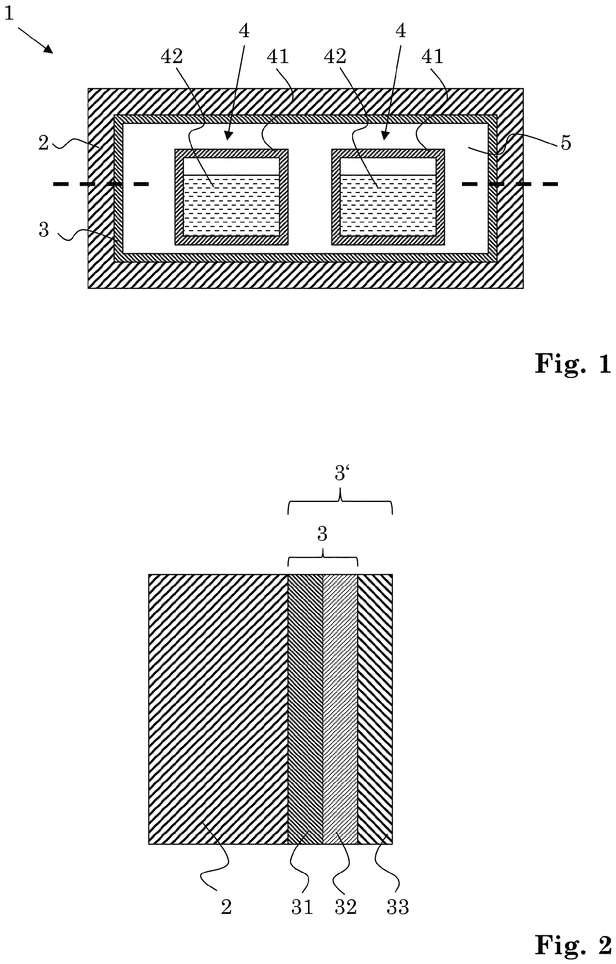

Fig. 1 zeigt, stark schematisiert, eine Verpackung 1, enthaltend mehrere Produkte 4. Die Verpackung 1 bildet eine Umverpackung für die Produkte 4, die in der Verpackung 1 luftdicht abgeschlossen sind. Die Produkte 4 sind als kompostierbare Portionspackungen (beispielsweise Kaffeekapseln) ausgebildet, die jeweils ausgebildet sind als eine mit einem Extraktionsgut 42 (beispielsweise Kaffeepulver; oder Tee) gefüllte Portionsverpackung 41.

Die Verpackung 1 besteht im wesentlichen aus einem Fasergussteil 2 und einer Folie 3, die einem Innenraum 5 zugewandt ist, der durch das Fasergussteil 2 umschlossen ist. Auch die Folie 3 umschliesst dem Innenraum 5. Die Produkte 4 sind im Innenraum 5 angeordnet.

Fasergussteil 2 und Folie 3 sind kompostierbar.

Durch die Folie 3 wird eine Sauerstoffdiffusionsbarriere und eine Wasserdampfdiffusionsbarriere gebildet, die das Extraktionsgut 42 schützt, zusätzlich zu dem Schutz, den das Extraktionsgut 42 durch die Portionsverpackung 41 geniesst.

Details zu den Barrierewirkungen sind weiter oben bereits genannt. Darum werden sie hier nicht wiederholt.

Wie durch die dicken gestrichtelten Linien in Fig. 1 symbolisiert, kann die Verpackung 1 an dafür vorgesehenen Stellen geöffnet werden, beispielsweise kann die Verpackung dafür zweiteilig sein oder aufgeklappt werden.

Fig. 2 zeigt, ebenfalls stark schematisiert, einen Schnitt durch eine Wand der Verpackung 1 aus Fig. 1. Die Folie 3 ist zweilagig oder optional dreilagig (dann als Folie 3' bezeichnet). Sie weist eine erste Lage 31 und eine zweite Lage 32 sowie optional eine dritte Lage 33 auf.

Die erste Lage 31 ist angrenzend an das Fasergussteil 2 und an die zweite Lage 32. Die dritte Lage 33 (wenn vorhanden) ist ebenfalls angrenzend an die zweite Lage 32.

Zwischen der Folie 3 bzw. 3' und dem Fasergussteil 2 kann optional ein Haftvermittler vorgesehen sein.

Vorteilhafte Materialien sind weiter oben bereits angegeben. Dementsprechend kann die Folie 3 bzw. 3' insbesondere wie folgt aufgebaut sein:
- erste Lage 1 aus PHBH, zweite Lage 32 aus PVOH, oder
- erste Lage 1 aus PBS, zweite Lage 32 aus PVOH; oder
- erste Lage 1 aus PHBH, zweite Lage 32 aus PVOH, dritte Lage aus PHBH; oder
- erste Lage 1 aus PHBH, zweite Lage 32 aus PVOH, dritte Lage aus PBS; oder
- erste Lage 1 aus PBS, zweite Lage 32 aus PVOH, dritte Lage aus PBS; oder
- erste Lage 1 aus PBS, zweite Lage 32 aus PVOH, dritte Lage aus PHBH.

Anstelle von PVOH kann auch ein anderes Vinylalkohol-Copolymer eingesetzt werden, insbesondere eines der weiter oben genannten (BVOH, EVOH).

Die zweilagigen Varianten können gut für trockene Produkte wie zum Beispiel für die beschriebenen Portionspackungen verwendet werden.

Die dreilagigen Varianten ermöglichen es, auch feuchte Produkte zu verpacken. Die dritte Lage 33 schützt die zweite Lage vor der Feuchtigkeit, die die Sauerstoffdiffusionsbarrierenwirkung der zweiten Lage verringern oder zerstören kann. Ausserdem könnte die zweite Lage aufgrund der Wasserlöslichkeit des vorgeschlagenen Polymers durch die Feuchtigkeit angelöst werden.

## Patentansprüche

1. **Verpackung,** aufweisend ein **Fasergussteil** und eine **Folie,** die dem Fasergussteil angeformt ist, wobei das Fasergussteil kompostierbar ist und die Folie kompostierbar ist, insbesondere wobei die Verpackung kompostierbar ist.

2. Verpackung gemäss Anspruch 1, wobei die Folie eine **Mehrlagenfolie** ist, die eine **erste Lage** aus einem **ersten Polymermaterial** und eine **zweite Lage** aus einem **zweiten Polymermaterial** aufweist, wobei die erste Lage zwischen dem Fasergussteil und der zweiten Lage angeordnet ist, insbesondere wobei die erste Lage an das Fasergussteil angrenzend ist.

3. Verpackung gemäss Anspruch 2, wobei das erste Polymermaterial ein **wasserunlösliches** Polymermaterial ist.

4. Verpackung gemäss Anspruch 2 oder Anspruch 3, wobei die erste Lage eine **Wasserdampfdiffusionsbarriere** bildet, mit einer Wasserdampf-Transmissionsrate bei 23°C und einer relativen Luftfeuchtigkeit von 85% von maximal 25 g/m² pro Tag, insbesondere von maximal 10 g/m² pro Tag;
insbesondere wobei die Folie eine **Wasserdampfdiffusionsbarriere** bildet, mit einer Wasserdampf-Transmissionsrate bei 23°C und einer relativen Luftfeuchtigkeit von 85% von maximal 10 g/m² pro Tag, insbesondere von maximal 5 g/m² pro Tag.

5. Verpackung gemäss einem der Ansprüche 2 bis 4, wobei das erste Polymermaterial zu mindestens 90 Gewichtsprozent, insbesondere im wesentlichen,
- aus einem **Polybutylensuccinat** besteht; oder
- aus einem **Poly(3-hydroxybutyrat-co-3-hydroxyhexanoat)** besteht, insbesondere aus einem mit einem **Füllmaterial** gefüllten Poly(3-hydroxybutyrat-co-3 -hydroxyhexanoat) besteht.

6. Verpackung gemäss einem der Ansprüche 2 bis 5, wobei die zweite Lage eine **Sauerstoffdiffusionsbarriere** bildet, mit einer Sauerstoff-Transmissionsrate bei 23°C und einer relativen Luftfeuchtigkeit von 50% von maximal 3 cm³/m² pro Tag, insbesondere von maximal 1 cm³/m² pro Tag;
insbesondere wobei die Folie eine **Sauerstoffdiffusionsbarriere** bildet, mit einer Sauerstoff-Transmissionsrate bei 23°C und einer relativen Luftfeuchtigkeit von 50% von maximal 1 cm³/m² pro Tag, insbesondere von maximal 0.2 cm³/m² pro Tag.

7. Verpackung gemäss einem der Ansprüche 2 bis 6, wobei das zweite Polymermaterial zu mindestens 90 Gewichtsprozent, insbesondere im wesentlichen, aus einem **Vinylalkohol-Copolymer** besteht.

8. Verpackung gemäss einem der Ansprüche 2 bis 7, wobei das zweite Polymermaterial zu mindestens 90 Gewichtsprozent, insbesondere im wesentlichen, aus einem der folgenden besteht:
- Poly(Vinylalkohol)-Copolymer;
- Butendiol-Vinylalkohol-Copolymer;
- Ethylen-Vinylalkohol-Copolymer;
oder aus einer Mischung von mindestens zwei der folgenden besteht:
- Poly(Vinylalkohol)-Copolymer;
- Butendiol-Vinylalkohol-Copolymer;
- Ethylen-Vinylalkohol-Copolymer.

9. Verpackung gemäss einem der Ansprüche 1 bis 8, wobei die Folie eine Lage auf weist, die zu mindestens 90 Gewichtsprozent, insbesondere im wesentlichen, aus einem **Poly(3-hydroxybutyrat-co-3-hydroxyhexanoat)** besteht, insbesondere aus einem mit einem **Füllmaterial** gefüllten Poly(3-hydroxybutyrat-co-3-hydroxyhexanoat) besteht; wobei die Lage
- eine **Wasserdampfdiffusionsbarriere** bildet, mit einer Wasserdampf-Transmissionsrate bei 23°C und einer relativen Luftfeuchtigkeit von 85% von maximal 25 g/m² pro Tag, insbesondere von maximal 10 g/m² pro Tag; und
- eine **Sauerstoffdiffusionsbarriere** bildet, mit einer Sauerstoff Transmissionsrate bei 23°C und einer relativen Luftfeuchtigkeit von 50% von maximal 3 cm³/m² pro Tag, insbesondere von maximal 1 cm³/m² pro Tag.

10. Verpackung gemäss einem der Ansprüche 2 bis 9, wobei durch die Verpackung ein **Innenraum** zur Aufnahme eines zu verpackenden Produkts umschliessbar ist, und wobei die zweite Lage an den Innenraum angrenzend ist.

11. Verpackung gemäss einem der Ansprüche 2 bis 9, wobei die Folie eine **dritte Lage** aus einem **dritten Polymermaterial** aufweist, wobei die zweite Lage zwischen der ersten Lage und der dritten Lage angeordnet ist, und wobei durch die Verpackung ein **Innenraum** zur Aufnahme eines zu verpackenden Produkts umschliessbar ist, wobei die dritte Lage an den Innenraum angrenzend ist, insbesondere wobei die zweite Lage an die erste Lange und an die dritte angrenzend ist.

12. Verpackung gemäss Anspruch 11, wobei das dritte Polymermaterial ein **wasserunlösliches** Polymermaterial ist, insbesondere wobei das dritte Polymermaterial zu mindestens 90 Gewichtsprozent, insbesondere im wesentlichen,
- aus einem **Polybutylensuccinat** besteht; oder
- aus einem **Poly(3-hydroxybutyrat-co-3-hydroxyhexanoat)** besteht, insbesondere aus einem mit einem **Füllmaterial** gefüllten Poly(3-hydroxybutyrat-co-3-hydroxyhexanoat) besteht.

13. Verpackung gemäss einem der Ansprüche 1 bis 12, wobei Verpackung eine **Umverpackung** für mehrere Portionspackungen ist, die jeweils ein Extraktionsgut beinhalten, und die kompostierbar sind.

14. **Verfahren** zur Herstellung einer Verpackung, insbesondere einer Verpackung gemäss einem der Ansprüche 1 bis 13, beinhaltend
- Bereitstellen eines kompostierbaren Fasergussteils;
- Bereitstellen einer kompostierbaren Folie;
- Anformen der Folie an das Fasergussteil.

15. Verfahren gemäss Anspruch 14, wobei das Anformen ein **Thermoformen** der Folie beinhaltet.
